Europäisches Patentamt

European Patent Office

Office européen des brevets

(11) Veröffentlichungsnummer: **0 377 796**
**A2**

## EUROPÄISCHE PATENTANMELDUNG

(21) Anmeldenummer: 89119680.0

(51) Int. Cl.⁵: **B24B 49/00**

(22) Anmeldetag: 24.10.89

(30) Priorität: 10.01.89 DE 3900491

(43) Veröffentlichungstag der Anmeldung:
18.07.90 Patentblatt 90/29

(84) Benannte Vertragsstaaten:
AT BE CH DE ES FR GB GR IT LI LU NL SE

(71) Anmelder: Hoesch Stahl Aktiengesellschaft
Rheinische Strasse 173
D-4600 Dortmund 1(DE)

(72) Erfinder: Böttcher, Wolfgang, Dr.
Auf dem Hilf 35
D-5840 Schwerte 4(DE)
Erfinder: Borchert, Werner, Dipl.-Ing.
Florastrasse 30
D-4630 Bochum 1(DE)
Erfinder: Kopineck, Hermann-Josef, Prof. Dr.
Wildbannweg 36
D-4600 Dortmund 50(DE)
Erfinder: Richter, Helmut, Dr.
Preinstrasse 71
D-4600 Dortmund 30(DE)
Erfinder: Stutzinger, Ferdinand
Breierspfad 170
D-4600 Dortmund 1(DE)

(54) Mess- und Ausrichteinrichtung an einer Rundschleifmaschine.

(57) Die Erfindung betrifft eine Meß- und Ausrichteinrichtung an einer Rundschleifmaschine mit an einem Schleifsteinsupport befestigtem, die zu schleifende Walze teilweise mit einem Abstand umfassenden Meßarm, an dessen Anfang und Ende und in der Mitte auf die Drehachse ausgerichtete Meßsonden bzw. Meßaufnehmer befestigt sind, die mit einem auswertenden Computer verbunden sind, der wiederum mit einer Steuerung der Antriebe zum Verstellen der Walzenlager und der Anstellung der Schleifscheibe verbunden ist.

Figur : 1

EP 0 377 796 A2

## Meß- und Ausrichteinrichtung an einer Rundschleifmaschine

Die Erfindung betrifft eine Meß- und Ausrichteinrichtung an einer Rundschleifmaschine mit an einem Schleifsteinsupport befestigtem, die zu schleifende Walze teilweise mit einem Abstand umfassenden Meßarm, an dem auf die Drehachse ausgerichtete Meßsonden bzw. Meßaufnehmer befestigt sind, die mit einem auswertenden Computer verbunden sind, der wiederum mit einer Steuerung der Antriebe zum Verstellen der Walzenlager und der Anstellung der Schleifscheibe verbunden ist.

Es ist aus der DE-OS 3448030 eine Ausrichteinrichtung bekannt, die mit jeweils 2 in radialer Richtung versetzter feststehender Meßaufnehmer außermittige Lagerungen der zu schleifenden Walze feststellt und bei der über eine Regelvorrichtung die Lager nachgestellt werden, um den Fehler zu korrigieren.

Aus der DE-OS 3409287, Seite 9, zweiter Absatz und aus der US 3.6.16.578 ist außerdem bekannt, daß die feststehenden Meßaufnehmer durch am Meßarm befestigte Meßaufnehmer ersetzt werden, wodurch die Anzahl der Meßaufnehmer für die Ausrichtung der Walze verringert wird. Aus den gleichen Schriften ist ferner bekannt, daß die für die Ausrichtung der Lager benötigten Meßaufnehmer gleichzeitig zum Überwachen des Schleifvorganges der Walze benutzt werden.

Es hat sich herausgestellt, daß bei mit diesen bekannten Vorrichtungen geschliffenen Walzen für Walzwerke immer noch kleine Fehler im zu schleifenden Profil auftreten. Diese Art von Fehlern tritt dadurch auf, daß die zu schleifenden Walzen nicht genau mittig gelagert sind. Es fällt die Drehachse der Walze nicht genau mit der Drehachse der Lagerung der Maschine zusammen. Diese Fehler entstehen auch oft während des Schleifens.

Es ist nicht möglich, mit einer Meß- und Ausrichteinrichtung entsprechend der DE-OS 3448030, bei der in der Nähe einer Walzenlagerung mit zwei um 90 ° versetzten Meßaufnehmern gemessen wird, eine sehr genaue Ausrichtung der Walze zu erreichen.

Man denke sich eine absolut fehlerlose Walze, die so in die Lagerung eingespannt ist, daß ihre Drehachse ganz genau mit den Drehachsen der Lager übereinstimmt und als einziger Fehler lediglich z. B. das rechte Lager um genau 10 μm tiefer sitzt als es normalerweise sitzen müßte, so ist dieser Fehler mit 2 Meßsonden, wie in der DE-OS 3448030 gezeigt, feststellbar und ausrichtbar, weil die obere Meßsonde einen um 10 μm vergrößerten Walzenabstand anzeigt. Wenn dieser Fehler des rechten Lagers noch dahingehend abgewandelt wird, daß das fehlerhafte Lager auch auf einer waagerecht liegenden Ebene um ebenfalls 10 μm aus der richtigen Lage heraus versetzt angeordnet ist, so zeigt auch der den waagerechten Abstand messende Meßaufnehmer die 10 μm Abstand an.

Diese Anzeigen von 10 μm sind jetzt nicht mehr eindeutig zu deuten. Es besteht einmal die Möglichkeit, wie beschrieben, daß die Walze die ideale Form besitzt und das z. B. rechte Lager fehlerhaft in seiner Lage angebracht ist.

Die andere Möglichkeit besteht darin, daß das z. B. rechte Lager in seiner Lage genau stimmt, die Walze jedoch in der Nähe des rechten Lagers im Durchmesser um 10 μm kleiner ist als am linken Lager.

In der Praxis gibt es keine genau hergestellte Walze. Es gibt Fehler an der Walze und in der Anordnug der Lager. Beide Fehler überlagern sich und der Meßaufnehmer mißt den überlagerten Wert, weil es unbekannt ist, wie groß der Fehler z. B. des Lagers ist, ist es auch nicht möglich, eine ganz genaue Ausrichtung des Lagers mit nur 2 an einer Lagerseite messenden Meßaufnehmern zu erreichen.

Es ist die Aufgabe der Erfindung eine Meß- und Ausrichtvorrichtung zu schaffen, mit der vor und während des Schleifens die Walzen achse in besonders genauer Übereinstimmung mit der Maschinenachse gebracht wird und die Genauigkeit beim Schleifen bezüglich des Einhaltens der Maße erhöht wird.

Diese Aufgabe wird durch die im kennzeichnenden Teil des Anspruches 1 beschriebenen Maßnahmen gelöst. Weiterbildung sind in den Unteransprüchen 2 bis 7 beschrieben.

In dem Anspruch 8 ist ein Verfahren beschrieben, nach dem die gedachten Verlängerungen der Drehachse der Lager der Walzen auf genau eine Linie ausgerichtet werden.

Im Anspruch 9 wird ein Verfahren aufgezeigt, mit dem Fehler in der Führung des Supportes ausgeglichen werden. Beim Schleifen werden nach der Erfindung die Maße auf weniger als 10 μm eingehalten. Diese hohe Genauigkeit wird auch dadurch erzielt, daß die Meß- und Ausrichteinrichtungen leicht nachkalibriert werden können.

Die Meßaufnehmer geben ihre Meßdaten an einen Rechner. Der Rechner rechnet nach einem Algorithmus aus den Meßwerten den Durchmesser der Walze und die x-y Korrekturen für die Walzenausrichtung, und wenn gefordert wird, die Balligkeit und den Durchmesser der Walze aus und gibt die Sollwerte an die entsprechenden Stellglieder ab. Eine einfache Kalibrierung der Meßsonden wird mit einer an der Rundschleifmaschine festmontierten runden Kalibrierscheibe, deren Mitte sich auf der Maschinenachse befindet, erreicht.

Als Längenmeßsonden werden vorzugsweise berührungslos arbeitende Sonden mit sehr kleinem Meßfleckdurchmesser verwendet. Diese können abstandsregelnde Luftdüsen in Kombination mit Induktionsmeßgeräten sowie zur Erfassung großer Durchmesserunterschiede unter den Walzen auch gekoppelte Meßsysteme (z. B. o. g. Druckluftsonde und Spindelantrieeb mit Schrittmotor und Drehwinkelgeber) sein. Auch optische, z. B. nachdem Triangulationsprinzip, arbeitende Abstandssensoren können verwendet werden. Bei naßgeschliffenen Walzen ist den Druckluftsonden der Vorzug zu geben.

Ein mögliches Ausführungsbeispiel ist in den schematischen Zeichnungen wiedergegeben. Es zeigt

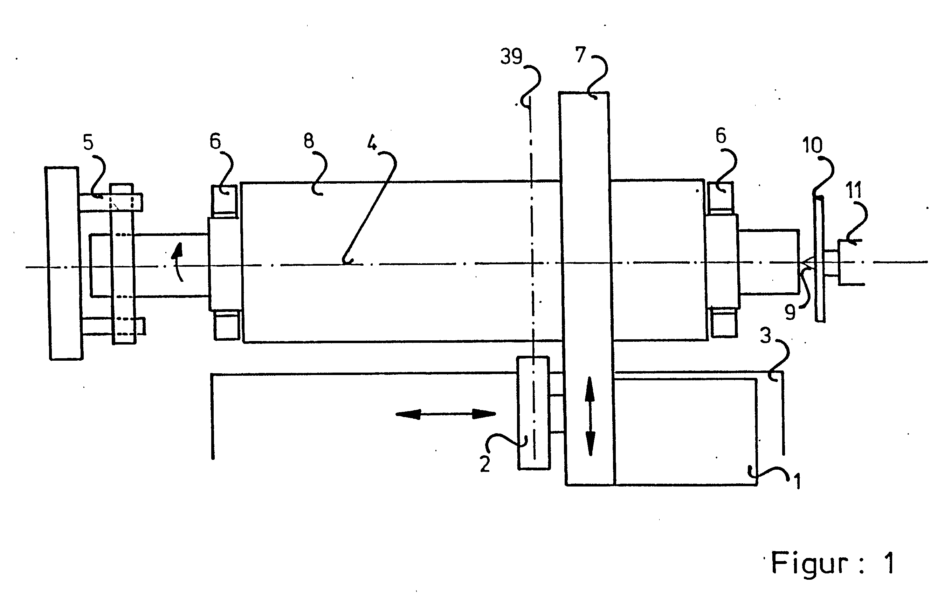

Fig. 1 eine Rundschleifmaschine mit Drehvorrichtung und Meßarm mit Meßsonden

Fig. 2 Anordnung der Meßsonden

Fig. 3 Blockbild

Fig. 4 Eichscheibe mit Körnerspitze und Justierbohrung

Fig. 5 Verstellvorrichtung mit Meßvorrichtung

Auf dem parallel zur Maschinenachse 4 verfahrbaren Längssupport 3 der Rundschleifmaschine ist der Schleifmaschinenantrieb 1 mit seiner Schleifscheibe 2 befestigt. Über einen weiteren, nicht dargestellten Quersupport, ist die Schleifeinheit gegen die zu schleifende Walze 8 verstellbar. Der Meßarm 7 ist mit dem Längssupport 3 festverbunden und steht um 90° versetzt zum Längssupport 3 quer zur zu schleifenden Walze 8 vorzugsweise in der Ebene des Schleifsteins 30. Die zu schleifende Walze 8 lagert in den justierbaren Lünetten 6 und wird auf der einen Seite von dem Walzenantrieb 5 angetrieben. An der anderen Seite der Walze befindet sich ein Reitstock 11, der eine Kalibrierscheibe 10 und eine Körnerspitze 9 trägt. Die Körnerspitze hat lediglich die Aufgabe, zur Erfassung von Ungenauigkeiten der Schleifmaschine, wie z. B. Bettbahnverschleiß, eine Musterwalze mit bekanntem Durchmesser einzuspannen und zu zentrieren. Im normalen Schleifbetrieb wird die Körnerspitze nicht benötigt.

Der Meßarm 7 ist C-bogenförmig ausgebildet. Er greift aufgrund seiner geometrischen Form über die zu bearbeitende Walze 8. Die C-Bogenform umschreibt einen Halbkreis. Jeweils an den Enden ist eine Meßsonde 12 und 13 befestigt. Die dritte Meßsonde 14 ist in einem beliebigen Winkel $\vartheta$ zwischen den Meßsonden 12 und 13 auf dem Meßarm 7 montiert. Der gewählte Winkel zu den beiden äußeren Meßsonden sowie der gewählte Winkel zwischen den beiden äußeren Sonden wird durch den Rechenvorgang im Rechner berücksichtigt.

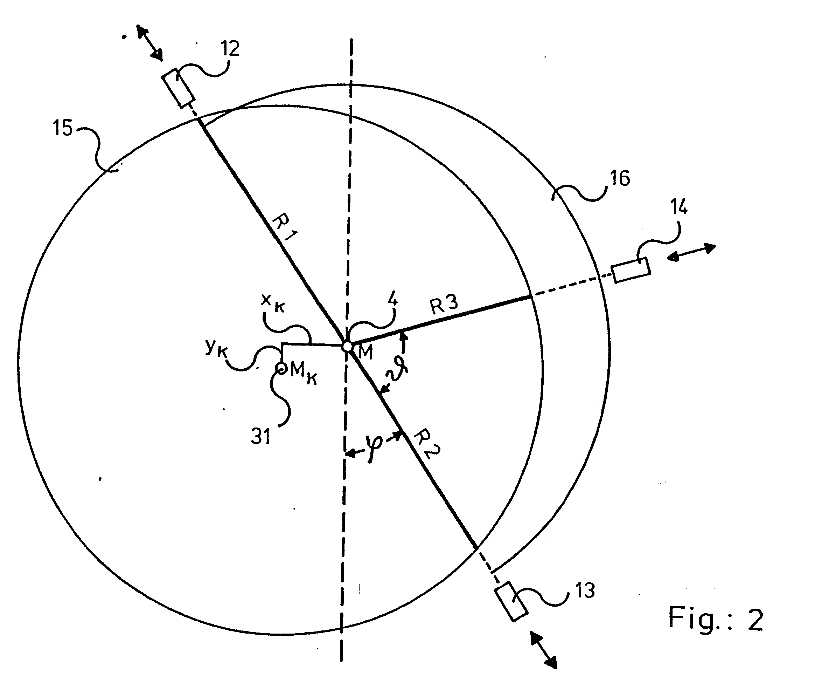

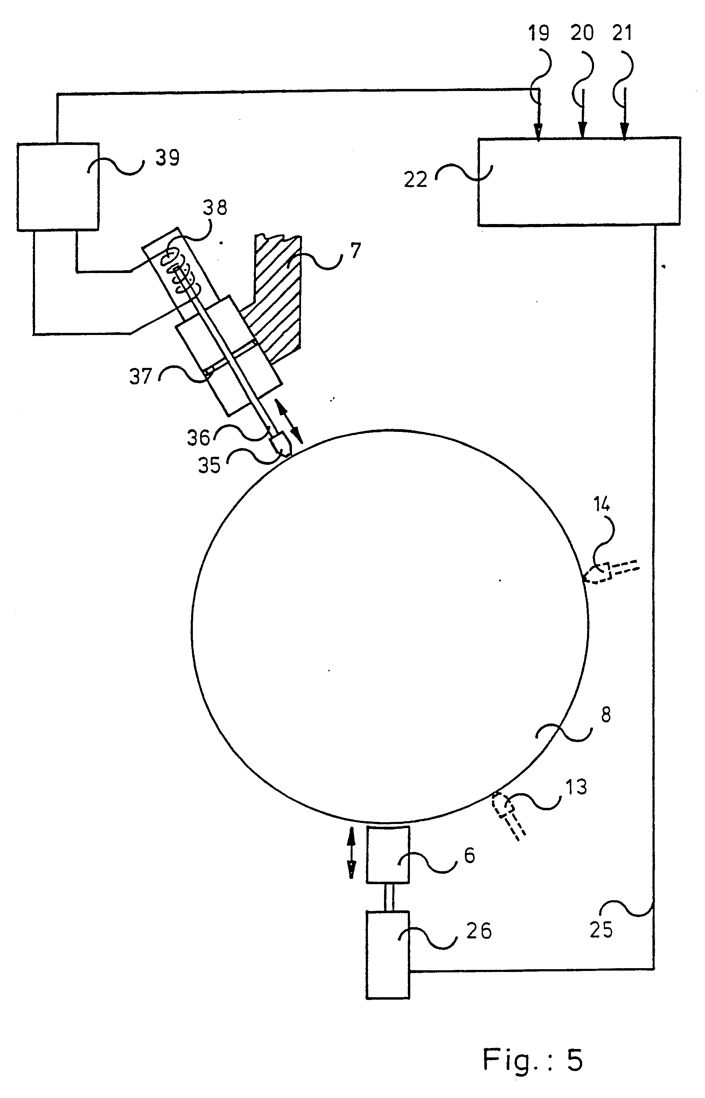

In der Figur 2 wird die Anordnung der Meßsonden deutlich. Die Meßsonden 12, 13, 14 sind über eine festmontierte in Fig. 5 dargestellte Vorrichtung in ihrem Abstand zur bearbeitenden Walze 8 automatisch oder manuel verstellbar. Im Meßeinsatz sowie im Kalibriervorgang werden alle drei Meßsonden gleichmäßig und gleichzeitig verfahren. Die Sonden sind im Meßarm so orientiert, daß sie alle auf die Maschinenachse 4 weisen.

Bevor die Meßsonden jedoch genau messen können, müssen sie kalibriert werden, dieses geschieht mit der Kalibrierscheibe 10. Durch einen Maschinenbefehl fahren die Meßsonden 12, 13, 14 von der zu bearbeitenden Walze 8 weg in nicht dargestellte Endstellungen. Danach fährt der Längssupport 3 mit dem hochgeklappten Meßarm 7 über die Kalibrierscheibe 10, wo der Meßarm in die Kalibrierposition abgesenkt wird. Die Meßsonden nähern sich der Kalibrierscheibe 10 automatisch bis in die Meßstellung. Die Kalibrierung der Meßsonden 12, 13, 14 wird automatisch oder manuell durchgeführt. Bei der Kalibrierung werden die an der Kalibrierscheibe ermittelten Meßsignale mit dem bekannten Radius der Kalibrierscheibe verglichen, die Abweichungen im Rechner bis zum nächsten Kalibriervorgang gespeichert und in die Auswertealgorithmen einbezogen.

Nach dem abgeschlossenen Eichvorgang werden die Meßsonden - 12, 13, 14 wieder in ihre Parkstellung gefahren. Die Meßvorrichtung ist nun für den Meßvorgang kalibriert und kommt wieder mit an der zu bearbeitenden Walze 8 zum Einsatz.

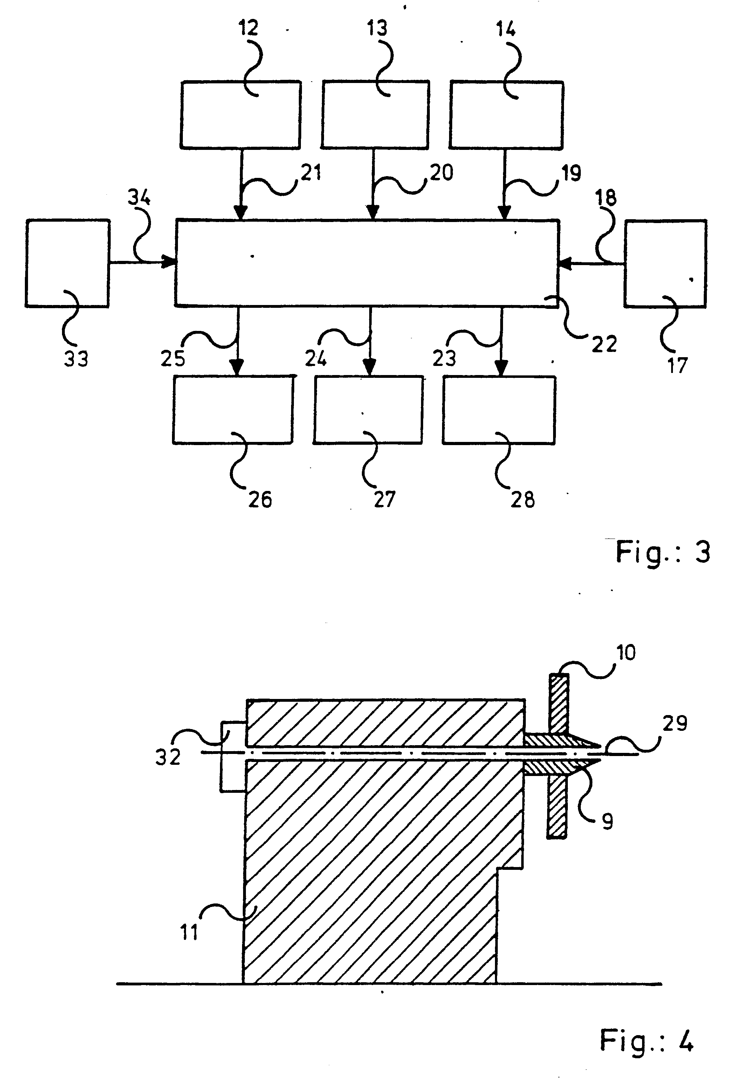

Die Kalibrierscheibe 10 wird selbst dadurch justiert, daß an der Antriebsvorrichtung 5 der Rundschleifmaschine eine in der Länge kurze Walze eingespannt wird (z. B. 200 mm lang), in der sich entlang der Längsachse eine kleine Bohrung befindet, in der ein Laser eingebaut ist, der in Richtung der Drehachse mit einem sehr geringen Stahldurchmesser strahlt. Der Strahl ist genau auf die Maschinenachse ausgerichtet. In der Körnerspitze 9 befindet sich eine Justierbohrung 29 (s. Fig. 4), durch die der Laserstrahl genau zentrisch hindurchgehen muß. Für diese Justierung wird beispielsweise ein empfindliches Positionsmeßgerät 32 (z. B. Photo diode) verwendet, dessen Mittelpunkt mit dem Zentrum der Justierbohrung 29 in der Körnerspitze 9 und somit mit dem Mittelpunkt der Kalibrierscheibe 10 übereinstimmt. In dem Fall, daß der Laserstrahl genau im Mittelpunkt des Positionsmeßgerätes auftrifft, ist die Kalibrierscheibe exakt auf die Maschinenachse ausgerichtet. In dem anderen Fall muß eine Korrektur der Lage des Spindelstocks 11 vorgenommen werden.

Es kann vorkommen, daß Walzen nicht genau zentrisch gelagert sind, z. B. dann, wenn aus irgendeinem Grund der Walzenballen und eine oder beide Lünettenlaufflächen nicht genau konzentrisch sind. In diesem Fall weicht die Lage der Walzenachse 31 von der Maschinenachse um die in Fig. 2 angedeuteten Werte xk und yk ab. Bei dezentral gelagerten Walzen ist eine gezielte Formgebung nicht möglich, die Walzen müssen deshalb genau auf die Maschinenachse ausgerichtet werden, wie es durch die zentrierte Walze 16 angezeigt ist. Die Meßsonden 12, 13, 14 liefern bei einer dezentral gelagerten Walze 15 unterschiedliche Meßsignale für die Abstände R1, R2 und R3. Diese Meßsignale gehen über die elektrischen Verbindungen 19, 20, 21 an einen Rechner 22. Der Rechner 22 rechnet nach einem schnell ablaufenden Algorithmus die genauen Korrekturwerte xk und yk gemäß folgenden Gleichungen aus (die Winkel $\vartheta$ und $\phi$ snd Fig. 2 zu entnehmen):

$$xk = y \cdot \sin\phi + x \cdot \cos\phi$$

$$xk = -y \cdot \cos\phi + x \cdot \sin\phi$$

$$\text{mit } x = \frac{(R1 \cdot R2 - R3^2 - (R1 - R2) \cdot R3 \cdot \cos\vartheta))}{(2 \cdot R3 \cdot \sin\vartheta)}$$

$$y = (R1 - R2)/2$$

Aus Gründen der Einfachheit wurde hierbei der Winkel zwischen den beiden äußerden Sonden 12, 13 zu 180° gewählt. Anschließend werden die Korrekturwerte über die Verbindung 25 an die Stellglieder 26 der justierbaren Lünetten 6 weitergegeben, die ein Verstellen der Lünetten 6 bewirken.

Dieser Regelvorgang wird beliebig oft wiederholt, also auch dynamisch durchgeführt. Somit ist eine permanente Kontrolle der Walzenlage auch während des Schleifvorganges gegeben.

In der Fig. 5 ist dieser Regelvorgang für die y-Lagekorrektur anhand einer Druckluftsonde dargestellt. Die Luftdüse 35 bleibt in einem geringen Abstand (z. B. 0,1 mm) über der Walzenoberfläche auch bei sich verändernden Walzendurchmesser stehen. Diese genaue Abstandseinhaltung wird durch den sich bildenden Staudruck unterhalb der Düse 35 bewirkt. Der Staudruck wird durch den innen hohlen Stößel 36 auf die der Walze 8 zugekehrten Seite des Kolbens 37 übertragen. Gegen die andere Seite des Kolbens 37 drückt eine nicht eingezeichnete Feder.

Über den Stößel 36, der an dem einen Ende mit der Luftdüse 35 versehen ist, die wiederum, wie schon erwähnt, zusammen mit dem Kolben 37 in einem pneumatischen Regelkreis für einen konstanten Abstand zur Walzenoberfläche 8 sorgt, ruft jede Veränderung des Walzendurchmessers und der Walzenlage in der Spule des induktien Wegaufnehmers 38 ein dem Stößelhub entsprechendes Signal hervor. Dieses Signal wird über einen Verstärker 39 dem Rechner 22 zugeleitet, der zusammen mit den beiden übrigen Sondensignalen 20 und 21 u. a. die erforderliche Lagekorrektur in y-Richtung berechnet und diesen Wert über die Leitung 25 an die Verstellvorrichtung 26, üblicherweise bestehend aus einem Motor mit Getriebe, weitergibt, welche die Lünette 6 in der Höhe nachjustiert.

Gleichzeitig sind die Meßsonden 12, 13, 14 in der Lage, auch den Durchmesser und die eventuell gewünschte Balligkeit zu erfassen. Es ist das selbe Meßwertetripel R1, R2, R3 wie für die xy-Lagebestimmung, das dem Rechner 22 zur Verfügung gestellt wird. Nach einem anderen Algorithmus wird aus den Meßdaten der Istdurchmesser errechnet:

$$\emptyset = \sqrt{\frac{(R1 \cdot R2 - R3^2 - (R1 \cdot R2) \cdot R3 \cdot \cos\vartheta)^2}{(R3 \cdot \sin\vartheta)^2 + (R1 + R2)^2}}$$

Der Solldurchmesser in der Vorgabe 17 wird über die Verbindung 18 dem Rechner 22 ebenfalls zugeführt. Die aus Solldurchmesser und Istdurchmesser errechnete Regelabweichung geht über die Verbindung 24 an die Durchmesserstelleinheit 27 und bewirkt somit eine Veränderung des Quersupports der Schleifmaschine 1. Es kann vor kommen, daß die Walzenballen aufgrund von Rissen in der Walze oft stark abgeschliffen werden müssen. In diesem Falle wird der gewünschte Solldurchmesser schrittweise in mehreren Schleifdurchgängen erreicht. Durch die vorgenannte Vorgehensweise ist es möglich, dynamisch den Walzendurchmesser zu erfassen und auch Walzen mit genau gleichen Durchmessern herzustellen. Aufgrund dieses Meßvorganges ist es auch möglich, den Walzenschleifprozeß vollautomatisch ablaufen zu lassen.

Die Balligkeit bzw. Form eines zu schleifenden Rotationskörpers wird auf zweierlei Weise erhalten:

1. aus den über der ganzen Länge des Rotationskörpers genau ermittelten Durchmesserwerten durch den Rechner.

2. direkt durch Nutzung der Meßsignale von einer der drei Meßsonden, vorzugsweise Sonde 13.

Die hierfür nötige Stellgröße geht vom Rechner 22 über die Verbindung 23 an die Balligkeitstelleinheit 28, die eine Verstellung der Schleifscheibe 2 quer zur Maschinenachse 4 bewirkt.

Die für die Auswertung und Steuerung benötigte Supportposition in z-Richtung (d. h. parallel zur Maschinenachse) wird mittels einer Längenmeßeinrichtung 33 gemessen, deren Meßsignal über 34 ebenfalls dem Rechner 22 zugeführt wird.

Die Erfassung der Meßdaten über die Meßsonden 12, 13, 14 geschieht vorzugsweise berührungslos und wird mit einer Genauigkeit von 10 $\mu$m während des Walzenschleifens ermittelt. Durch dieses Meßverfahren können auch Abnutzungen der Schleifmaschine und maschinengegebene Parameter mit ausgeregelt werden.

Mit einer mittels der justierten Körnerspitze fest eingespannten Musterwalze mit genau bekannter Formgebung (vorzugsweise zylindrisch) und bekanntem Durchmesser werden Abnutzungserscheinungen an der Bettbahn für den Support erfaßt und auf einfache Weise in den Auswertalgorithmen zur Bestimmung der Durchmesser, Balligkeit sowie Ausrichtung der zuschleifenden Walzen berücksichtigt.


Bezugszeichenverzeichnis

1. Schleifmaschinenantrieb
2. Schleifscheibe
3. Support
4. Maschinenachse
5. Walzenantrieb und Spannvorrichtung
6. Lünetten
7. Meßarm
8. Walze
9. Körnerspitze
10. Kalibrierscheibe
11. Reitstock
12. Meßsonde 1
13. Meßsonde 2
14. Meßsonde 3
15. Walze nicht zentrisch
16. Walze zentrisch
17. Sollwertvorgabe
18. Verbindung
19. Verbindung
20. Verbindung
21. Verbindung
22. Rechner
23. Verbindung
24. Verbindung
25. Verbindung
26. x-y Koordinatenstelleinheit
27. Durcmesserstelleinheit
28. Balligkeitstelleinheit
29. Kalibrierbohrung
30. Schleifsteinebene
31. Mittelpunkt der nicht zentrisch gelagerten Walze
32. Positionsmeßgerät
33. Längenmeßeinrichtung
34. Meßsignal
35. Luftdüse
36. Stößel
37. Kolben
38. Spule des induktiven Wegaufnehmers
39. Verstärker

# EP 0 377 796 A2

**Ansprüche**

1. Meß- und Ausrichteinrichtung an einer Rundschleifmaschine mit an einem Schleifsteinsupport (3) befestigtem, die zu schleifende Walze (8) teilweise mit einem Abstand umfassenden Meßarm (7), an dem auf die Drehachse (4) ausgerichtete Meßaufnehmer (12, 13, 14) befestigt sind, die mit einem auswertenden Computer (22) verbunden sind, der wiederum mit einer Steuerung (26, 27, 28) der Antriebe zum Verstellen der Walzenlager und der Anstellung der Schleifscheibe (2) verbunden ist, dadurch gekennzeichnet, daß auf dem umfassenden Meßarm (7) in Längsrichtung mit Abständen untereinander verteilt, mindestens drei Längenmeßaufnehmer (12, 13, 14) angebracht sind und im auswertenden Computer (22) ein Programm zur Bestimmung der Lage der Walzenachse (4) und des Walzendurchmessers aus den Meßwerten und den Winkeln der Längenmeßaufnehmer (12, 13, 14) zueinander und zum Vergleich mit gespeicherten Sollwerten enthalten ist und bei Differenzen die Steuerungen der Antriebe zum Verstellen der Walzenlager (6) und/oder der Anstellung der Schleifscheibe (2) bis zur Beseitigung der Differenzen eingeschaltet sind.

2. Meß- und Ausrichtvorrichtung nach Anspruch 1 dadurch gekennzeichnet, daß der Meßarm (7) mit dem größten Teil seiner Länge annähernd halbkreisförmig ist.

3. Meß- und Ausrichtvorrichtung nach den Ansprüchen 1 und 2 dadurch gekennzeichnet, daß jeweils am Anfang und am Ende des umfassenden Teils des Meßarmes (7) ein Längenmeßaufnehmer (12, 13) angebracht ist und eine oder mehrere Längenmeßaufnehmer (14) dazwischenliegend angebracht sind.

4. Meß- und Ausrichtvorrichtung nach den Ansprüchen 1 bis 3 dadurch gekennzeichnet, daß sich an einer Lagerseite für mindestens 3 Längenmeßaufnehmer des Meßarmes eine feststehende Kalibriervorrichtung (10) befindet.

5. Meß- und Ausrichtvorrichtung nach Anspruch 4 dadurch gekennzeichnet, daß die Kalibriervorrichtung aus einer Scheibe (10) besteht, deren mittlere Achslinie mit der Verlängerung der Drehachse (4) der Walzenlagerung an der Rundschleifmaschine genau zusammenfällt.

6. Meß- und Ausrichtvorrichtung nach den Ansprüchen 4 und 5 dadurch gekennzeichnet, daß entlang der Achslinie der Scheibe eine kleine Bohrung angebracht ist.

7. Meß- und Ausrichtvorrichtung nach den Ansprüchen 1 bis 6 dadurch gekennzeichnet, daß an der Achse der Scheibe ein Aufnahmedorn oder Körner (9) für die zu schleifende Walze (8) angebracht ist, der in seiner Längsachse eine mit der Bohrung der Scheibe (10) deckungsgleiche oder zumindest konzentrisch liegende Bohrung enthält.

8. Verfahren zum Ausrichten einer Meß- und Ausrichtvorrichtung nach den Ansprüchen 1 bis 7 dadurch gekennzeichnet, daß an der Antriebsseite der Drehvorrichtung der zu schleifenden Walze (8) in die Einspannvorrichtung (5) ein kurzer walzenartiger Körper eingespannt wird, in den eine Laserlichtquelle eingebaut ist, die einen Laserstrahl von geringem Durchmesser zur Lagerseite mit dem Dorn (9) aussendet und die Lagerseite mit dem Dorn (9) in ihrer Lage geringfügig verändert wird, bis der Laserstrahl durch die Bohrung des Dornes (9) und der Eichscheibe (10) fällt.

9. Verfahren zum Eichen einer Meß- und Ausrichtvorrichtung nach den Ansprüchen 1 bis 7, bei dem Fehler und Abnutzungen in der Führungsbahn der Rundschleifmaschine in der Weise festgestellt werden, daß eine Walze mit bekannten Maßen in die Rundschleifmaschine eingespannt wird und der Meßarm (7) einmal in Längsrichtung entlang der Walze (8) bei eingeschalteter Aufnahme der Meßwerte verfahren wird und die gemessenen Meßwerte mit den bekannten Werten verglichen werden und Unterschiede zusammen mit der Position des Supports (3) auf der Längsführung in einem Speicher des auswertenden Computers (22) abgespeichert werden und bei zukünftigen Messungen jeweils der zur Supportstellung gehörende Fehlerwert aus dem Speicher abgerufen wird und in korrigierender Weise dem gemessenen Wert hinzugefügt wird.

6

EP 0 377 796 A2

Figur : 1

Fig.: 2

EP 0 377 796 A2

Fig.: 3

Fig.: 4

Fig.: 5